# EUROPEAN PATENT SPECIFICATION

(11) **EP 3 466 773 B1**
(45) Date of publication and mention of the grant of the patent: **08.12.2021**
(21) Application number: 17802252.1
(22) Date of filing: 22.05.2017
(51) Int. Cl.: B60S 1/38, B60S 1/52

(54) **WINDSCREEN WIPER**
SCHEIBENWISCHER
BALAI D'ESSUIE-GLACE

(30) Priority: 23.05.2016 ES 201630664
(43) Date of publication of application: 10.04.2019
(73) Proprietor: San Jose Torras, Juan Carlos, 08223 Terrasa (ES)
(72) Inventor: TEJEIRA, Vicens, 08223 MATADEPERA (BARCELONA) (ES)
(74) Representative: Vuillermoz, Bruno
(86) International application number: PCT/ES2017/070337
(87) International publication number: WO 2017/203079

(56) References cited:
- WO-A1-98/54036
- WO-A1-2005/016714
- DE-A1- 2 725 405
- DE-A1- 3 134 083
- DE-A1- 19 612 134
- DE-A1- 19 612 134
- ES-A1- 486 615
- FR-A1- 2 806 993
- GB-A- 2 038 169
- GB-A- 2 342 281
- IT-B- 1 126 665
- US-A- 4 060 872
- US-A- 4 754 517
- US-A- 5 979 010

## Description

### Object of the invention.

The invention relates to a windscreen wiper, than can be used with motor vehicles and having characteristics aimed at improving the windscreen cleaning.

### State of the art

Currently there is a wide variety of windscreen wipers for motor vehicles with a wide range of construction forms.

The current windscreen wipers do not give an efficient solution to the cleaning of those substances that are embedded in the windscreen after long hours of driving. Normally, even if the windscreen wiper system is operated with a supply of cleaning water, it is customary to further soil the windscreen. This is because current brush designs do not remove many of the particles that can fall on the windscreen.

All manufacturers seek to maximize the efficiency of the brushes designing new profiles and construction forms to increase pressure on the windscreen at the time of action.

For these drawbacks to be resolved, the applicant of the present invention developed a wiper device, described in the Spanish patent application P201431045. Said windscreen wiper device comprises: a wiper intended to contact and perform sweeps on a windscreen of a vehicle to remove water and dirt, and a support structure supporting the wiper and coupled to a drive arm of the windscreen wiper device; presenting the particularity that the brush comprises: two scraper blades arranged parallel along the length of the brush, and a scraper brush disposed along the wiper between the two scraper blades; defining the two scraper blades and the scraper brush three different contact zones of the brush with a windscreen of a vehicle.

**The arrangement** of the scraper brush between the two scraper blades guarantees the removal, by the scraping lips, of the substances removed by the brush, irrespective of the direction of rotation of the windscreen wiper. This way, it is achieved that every cleaning of the windscreen wiper removes any substance adhering to the windscreen.

Therefore, this precedent presents suitable characteristics to effectively remove the dirt adhered to the windscreen, by the action of the brush.

However, when it rains and the windscreen wiper is being used continuously, the permanent and joint action of the lips and the brush on the windscreen is not necessary, since under these conditions the scraper blades together with the rainwater make a proper cleaning of the windscreen wipers.

Therefore, in these conditions, there is a drawback in that there is an unnecessary wear and tear of the brush, with the consequent reduction of its life span.

The patent document DE19612134 describes a wiper blade having a wiper strip of elastically deformable material and comprising two mutually parallel wiper lips and an intensive cleaning element disposed between said lips. The intensive cleaning element is mounted on the wall of a washing liquid duct extending longitudinally in the wiper strip and, for intensive cleaning, intermittently contacts the vehicle windscreen due to the pressure of the liquid of washing transported. The section of the wall of the washing liquid line facing the windscreen of the vehicle and on which the intensive cleaning element is secured is resiliently deformed under the pressure of the conveyed washing liquid and is moves in the direction of the vehicle windscreen.

The patent document GB2 038 169A relates a windscreen wiper including a blade carrier supporting a flexible blade arrangement which includes a pair of generally parallel spaced lip members adapted to engage a windscreen surface so that the members bound a hollow space which is closed in use by the windscreen, at least one conduit for cleaning fluid communicating with the said hollow space and a flexible device mounted in the hollow space so as in use to be in contact with the surface of the windscreen between the lips, the blade carrier having a constant cross-section along its length.

### Description of the invention

The windscreen wiper device object of this invention, being of the type mentioned above, presents particular constructions aimed at providing two possible modes of operation of the device, selected at the convenience of the user depending on the type of cleaning to be carried out. The invention is defined by the appended claims.

In a first mode of operation, which is the default mode, the brush is arranged in an inoperative position, retracted with respect to the plane of contact between the wiper blades with the windscreen wiper; said scraping lips being responsible for removing rainwater and dirt from the windscreen.

In a second mode of operation, selectable by the user, the brush is arranged in an operative, more advanced position, simultaneously acting with the scraper blades on the surface of the windscreen, to perform a more intense cleaning of the windscreen.

Since this cleaning is usually selected by the driver of the vehicle when there is more persistent dirt adhered to the windscreen, a solution has been devised consisting in that the movement of the scraper brush from the inoperative position to the operative position occurs automatically when the driver activates the wiper. system for supplying cleaning water to the windscreen wiper.

This way, when the windscreen wiper is operated, it will work in the first mode of operation, keeping the brush in an inoperative position and only the scraper blades acting on the windscreen.

When the user activates the system for supplying cleaning water to the windscreen wiper, the cleaning water pressure itself hydraulically drives the scraper brush, causing it to move towards an operative position in which said scraper brush also acts on the windscreen wiper, performing a more energetic cleaning during the supply of cleaning water.

Thus, this device comprises a supply pipe that drives cleaning water to the brush; said pipe being connected by means of connecting tubes to a longitudinal chamber in which a brush support base is housed with the possibility of vertical displacement between an inoperative position, in which the bristles of the brush are arranged delayed with respect to the plane contact of the scraper blades with the windscreen wiper and a more advanced operative position, in which the brush bristles contact the windscreen.

The brush has a series of cleaning water outlet holes therethrough, once the brush has reached its operative position.

To be able to move the windscreen wipers between inoperative and operative positions, you only have a stroke of a few millimeters inside the mentioned chamber. As soon as the chamber has been filled with the cleaning water under pressure, the brush makes contact with the windscreen and immediately the water comes out through the brush through the exit holes defined in it.

The calculation of the inlet and outlet water flows must be adequate to achieve the optimum pressure on the windscreen.

This invention achieved not to wear the brush excessively when not using it whenever the windscreen wiper is activated and, further, the cleaning water is supplied at the same point where the windscreen wiper is located at each moment. The cleaning water supply will be activated in the usual way by operating the control on the vehicle to clean the windscreen with water.

### Description of the drawings

Complementing the description that is being made and in order to facilitate the understanding of the characteristics of the invention, a set of drawings in which, with an illustrative and nonlimiting character, the following has been represented is attached to the present specification:
- Figure 1 shows a schematic elevation view of an exemplary embodiment of the windscreen wiper according to the invention.
- Figures 2 and 3 show individual profile details of a front area of the brush, in which the scraper blades and the scraper brush can be observed; the brush being shown in an inoperative position in Figure 2 and in an operative position in Figure 3.

Preferred embodiment of the invention.

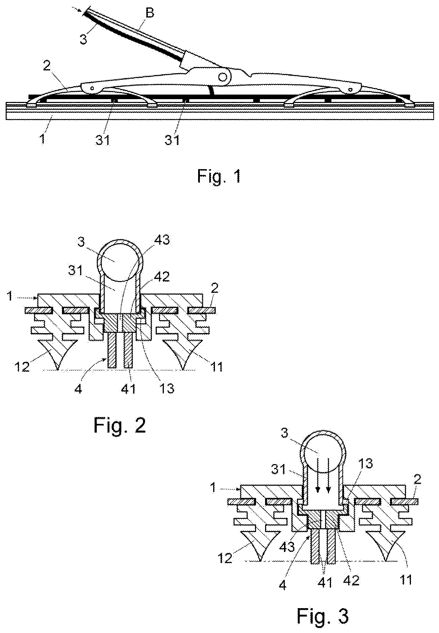

In the exemplary embodiment shown in FIG. 1, an exemplary embodiment of the windscreen wiper f this invention provided with a body (1) mounted on a mounting structure (2) on a drive arm (B) is shown schematically.

This wiper comprises a pipe (3) for supplying cleaning water, under pressure, said supply of cleaning water being activated, in a usual manner, by means of the actuation of the corresponding control located inside the vehicle.

As can be seen in figures 2 and 3 the brush comprises two scraper blades (11, 12) and a scraper brush (4) provided with bristles (41) and a base (42) mounted in a chamber (13) of the body (1) with the possibility of displacement between an inoperative position shown in figure 2, in which the bristles are arranged behind the contact plane of the scraper blades (11, 12) with the windscreen of the vehicle, and a position operative shown in Figure 3, in which the bristles (41) are arranged in an advanced contact position with the windscreen of the vehicle.

The cleaning water supply pipe (3) is connected by means of pipes (31) to the chamber (13) of the body (1); to which exit holes (43) defined in the base (42) of the brush (4) have access.

The sections of the pipe (3), of the tubes (31) and of the outlets (43) of the cleaning water outlet through the scraper brush are sized so that the cleaning water supply automatically moves the brush (4) from the inoperative position, represented in Figure 2, to the operative position represented in Figure 3; and the cleaning water exits through the holes (43) of the scraper brush, while the cleaning water supply is kept activated.

It is also provided that the wiper can incorporate in the chamber (13) an elastic means (not shown) type spring, strap or the like for returning of the brush (4) to the inoperative position when the supply of cleaning water ceases.

Once the nature of the invention has been sufficiently described, as well as a preferred embodiment, it is stated for the appropriate purposes that the materials, shape, size and arrangement of the described elements may be modified, provided that this does not entail an alteration. of the essential features of the invention that are claimed below.

## Claims

1. Windscreen wiper; applicable to motor vehicles and comprising: a body (1) mounted on a support structure (2), two scraper blades (11, 12) and a scraper brush (4) disposed between the two scraper blades and comprising bristles (41) and a base (42) mounted in a chamber (13) of the body (1) **characterized in that** the base (42) is mounted in the chamber (13) with possibility of displacement in the chamber between an inoperative position in which the bristles (41) are arranged delayed with respect to the contact plane of the scraper blades (11, 12) with the windscreen of the vehicle and an operative position, in which the bristles (41) are arranged in an advanced contact position with the windscreen (2); and **in that** it comprises a pipe (3) for supplying cleaning water, under pressure, connected by means of tubes (31) to the chamber (13) of the body (1), to which chamber (13) accesses some holes (43) of cleaning water outlets defined in the base (42) of the brush (4), whereby the cleaning water pressure itself hydraulically drives the scraper brush (4), causing it to move towards the operative position.

2. Wiper according to claim 1; **characterized in that** the sections of the pipe (3), of the tubes (31) and of the outlets (43) of the cleaning water through the scraper brush (4) are dimensioned so that the supply of cleaning water automatically moves the brush (4) from the inoperative position to the operative position; and the cleaning water comes out through the holes (43) of the scraper brush, during activation of the supplying of the cleaning water.

## Patentansprüche

1. Scheibenwischer; in Motorfahrzeugen einsetzbar und Folgendes umfassend: einen Körper (1), der an einer Trägerstruktur (2) angebracht ist, zwei Abziehblätter (11, 12) und eine Abziehbürste (4), die zwischen den beiden Abziehblättern angeordnet ist, und Borsten (41) und eine Basis (42) umfassend, die in einer Kammer (13) des Körpers (1) angebracht sind, **dadurch gekennzeichnet, dass** die Basis (42) in der Kammer (13) mit der Möglichkeit einer Verschiebung in der Kammer zwischen einer unwirksamen Position, in der die Borsten (41) in Bezug auf die Kontaktebene der Abziehblätter (11, 12) mit der Windschutzscheibe des Fahrzeugs versetzt angeordnet sind, und einer wirksamen Position angebracht ist, in der die Borsten (41) in einer vorgerückten Kontaktposition mit der Windschutzscheibe (2) angeordnet sind; und dadurch, dass er ein Rohr (3) zum Zuführen von unter Druck stehendem Reinigungswasser umfasst, das anhand von Schläuchen (31) mit der Kammer (13) des Körpers (1) verbunden ist, wobei einige Löcher (43) von Reinigungswasserauslässen, die in der Basis (42) der Bürste (4) definiert sind, zur Kammer (13) führen, wodurch der Druck des Reinigungswassers selbst die Abziehbürste (4) hydraulisch antreibt, wodurch bewirkt wird, dass sie sich in die wirksame Position bewegt.

2. Wischer nach Anspruch 1, **dadurch gekennzeichnet, dass** die Querschnitte des Rohres (3), der Schläuche (31) und der Auslässe (43) des Reinigungswassers durch die Abziehbürste (4) hindurch so bemessen sind, dass die Zuführung von Reinigungswasser die Bürste (4) automatisch von der unwirksamen Position in die wirksame Position bewegt; und das Reinigungswasser bei der Aktivierung der Zuführung des Reinigungswassers durch die Löcher (43) der Abziehbürste hindurch austritt.

## Revendications

1. Balai d'essuie-glace ; pouvant être appliqué à des véhicules à moteur et comprenant : un corps (1) monté sur une structure de support (2), deux lames racleuses (11, 12) et une brosse racleuse (4) disposée entre les deux lames racleuses et comprenant des poils (41) et une base (42) montée dans une chambre (13) du corps (1) ; **caractérisé en ce que** la base (42) est montée dans la chambre (13) avec une possibilité de déplacement dans la chambre entre une position non fonctionnelle dans laquelle les poils (41) sont agencés décalés par rapport au plan de contact des lames racleuses (11, 12) avec le pare-brise du véhicule et une position fonctionnelle, dans laquelle les poils (41) sont agencés dans une position de contact avancée avec le pare-brise (2) ; et **en ce qu'**il comprend un tuyau (3) pour fournir de l'eau de nettoyage, sous pression, relié au moyen de tubes (31) à la chambre (13) du corps (1), à laquelle chambre (13) accèdent certains trous (43) d'évacuations d'eau de nettoyage définis dans la base (42) de la brosse (4), moyennant quoi la pression d'eau de nettoyage elle-même entraîne de manière hydraulique la brosse racleuse (4), l'amenant à bouger vers la position fonctionnelle.

2. Essuie-glace selon la revendication 1 ; **caractérisé en ce que** les sections du tuyau (3), des tubes (31) et des évacuations (43) de l'eau de nettoyage à travers la brosse (4) racleuse sont dimensionnées de façon à ce que la fourniture d'eau de nettoyage bouge automatiquement la brosse (4) de la position non fonctionnelle à la position fonctionnelle ; et l'eau de nettoyage sorte à travers les trous (43) de la brosse racleuse, durant l'activation de la fourniture de l'eau de nettoyage.
